Europäisches Patentamt

European Patent Office

Office européen des brevets

(19)

(11) Publication number: **0 364 102**
**A2**

## (12) EUROPEAN PATENT APPLICATION

(21) Application number: **89309248.6**

(22) Date of filing: **12.09.89**

(51) Int. Cl.⁵: **B60R 13/02**

(30) Priority: **19.09.88 AU 453/88**

(43) Date of publication of application:
**18.04.90 Bulletin 90/16**

(84) Designated Contracting States:
**DE FR GB IT**

(71) Applicant: **BRIDGESTONE AUSTRALIA LIMITED**
**1028 South Road**
**Edwardstown South Australia(AU)**

(72) Inventor: **Rohrlach, Milo Leslie**
**28 Balmoral Avenue**
**North Brighton South Australia(AU)**

(74) Representative: **Tregear, George Herbert Benjamin et al**
**LLOYD WISE, TREGEAR & CO Norman House**
**105-109 Strand**
**London WC2R 0AE(GB)**

(54) **Vehicle headliner.**

(57) A roof headliner having a substrate (10) of corrugated fibreboard, a facing laminate itself having a face layer (12) of fabric and a layer of open cell soft resilient foam (13), and an intermediate layer of relatively stiff semi-rigid foam (15) sandwiched between the substrate (10) and the soft resilient foam (13), and adhering the substrate (10) to the facing laminate.

EP 0 364 102 A2

## VEHICLE HEADLINER

This invention relates to the roof headliner panel for a motor vehicle, and to a method of manufacture thereof.

## BACKGROUND OF THE INVENTION

Various proposals have been put forward for roof headliners previously, but roof headliners still constitute a high cost component of the trim of the interior of a motor vehicle. The use of adhesives has been found to be generally unsatisfactory and has been largely replaced by mechanical fixing devices. These however are slow to install and consequently attempts have been made to provide roof headliners made from a variety of materials, but these have been subject of disabilities which are quite serious under service conditions of very high temperature. It has been known for example for a roof headliner to sag under conditions of very high temperature.

For acoustic reasons, it is desirable that use be made of foam material which can absorb some of the sound within the cabin of a motor vehicle, but unreinforced foam plastics are usually soft and flexible and whilst they are excellent for sound absorption they lack the required rigidity to remain dimensionally stable over large temperature ranges.

## BRIEF SUMMARY OF THE INVENTION

It is essential that a roof headliner should resist deformation over large temperature changes, and with the main object of providing an improvement in this invention there is provided a roof headliner having a substrate of corrugated fibreboard, a facing tri-laminate itself having a face layer of fabric, a layer of open cell soft resilient foam, and an impervious backing film, and an intermediate layer of relatively stiff semirigid foam sandwiched between the substrate and the backing film, and adhering the substrate to the facing laminate.

One of the big advantages of this invention is that a very simple method is made available to manufacture the product, and in an embodiment of the invention a sheet of corrugated fibreboard is laid in a die cavity of a female die, foam forming chemical is applied over the fibreboard, a tri-laminate sheet having a face layer of fabric, a layer of soft resilient foam and an impervious backing film is located above the face of the fibreboard and foam forming chemical, and the die is closed during foaming of the chemical, the product thus formed having an intermediate layer of foam (which can be semirigid) between the substrate and the backing film.

## BRIEF DESCRIPTION OF THE DRAWINGS

An embodiment of the invention is described hereunder in some detail with reference to and as illustrated in the accompanying drawings in which:

Fig. 1 is a part section of a roof headliner made in accordance with this invention, but drawn to a very large scale;

Fig. 2A is a perspective view showing a frame for stretching a sheet of laminate having a face layer of fabric and a layer of soft resilient foam so that the layer can be carried by the top male die of a die set;

Fig. 2B is a fragmentary section on a much larger scale than Fig. 2A showing the manner in which the fabric is retained to the frame;

Fig. 3A illustrates in perspective two inserts which are used in the embodiment described for supporting ancillary equipment from the roof headliner of a motor vehicle;

Fig. 3B illustrates the lower (female) die part of a die set with the inserts of Fig. 3A positioned in the die when at a loading station external of a press;

Fig. 4A illustrates sheet corrugated fibreboard and sheet chopped strand glass mat for inserting into the female die of Fig. 3B;

Fig. 4B is a perspective view which shows that die with the sheets of Fig. 4A inserted in position in the die at its loading station;

Fig. 4C illustrates to a larger scale a section through the centre of the die showing the manner in which the sheets of Fig. 4A abut the inserts of Fig. 3A;

Fig. 5 shows the die portions in a press, but open, and with the upper male die portion having a sheet of tri-laminate with a face layer of fabric retained in position by the frame of Fig. 2A, prior to closure of the die parts;

Fig. 6 illustrates in perspective the trimming of the roof headliner after having been manufactured by the process of this invention;

Fig. 7A is a diagrammatic section which illustrates the piercing of the laminate layers (excepting the fabric layer) for acoustic purposes; and

Fig. 7B is a section similar to Fig. 7A but to a much larger scale illustrating details of the piercing operation.

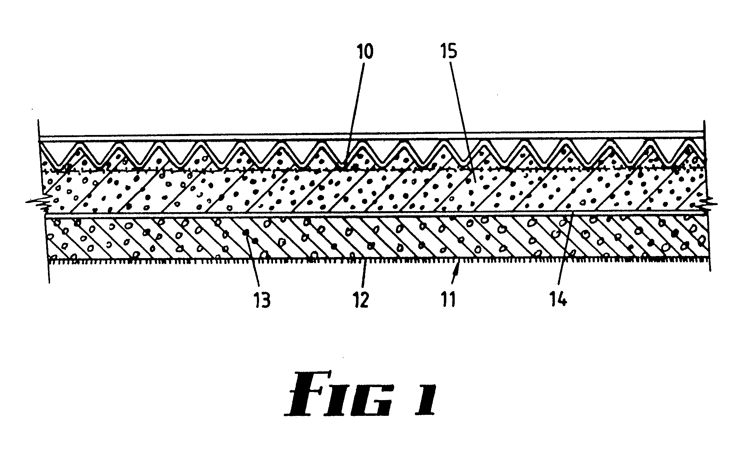

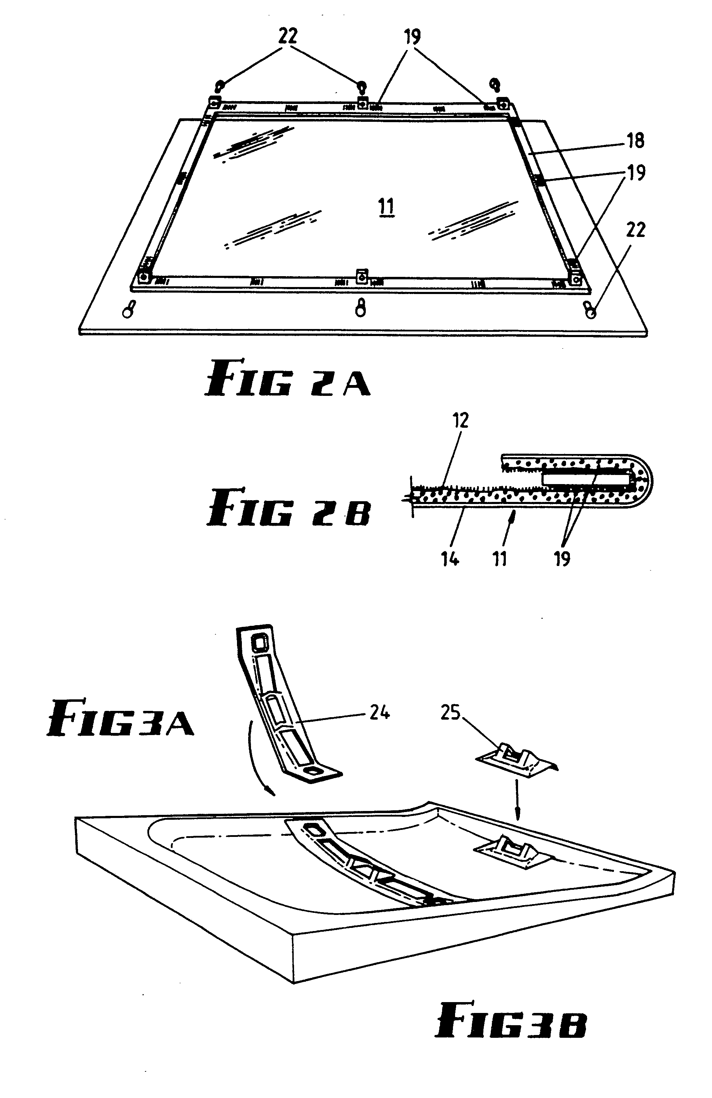

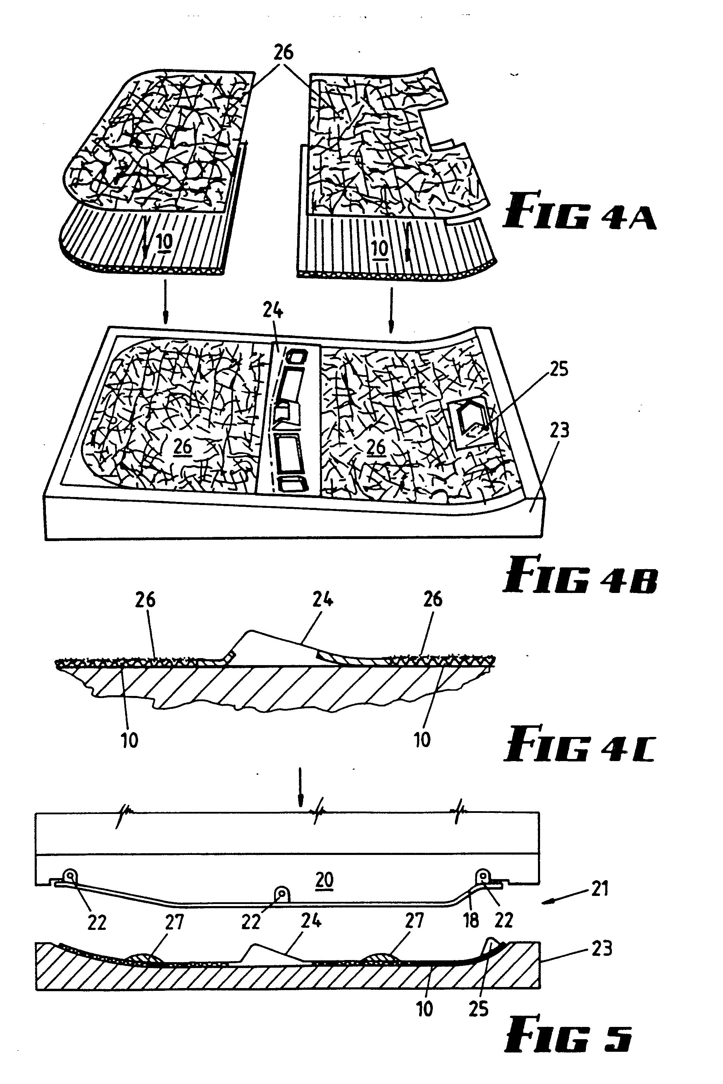

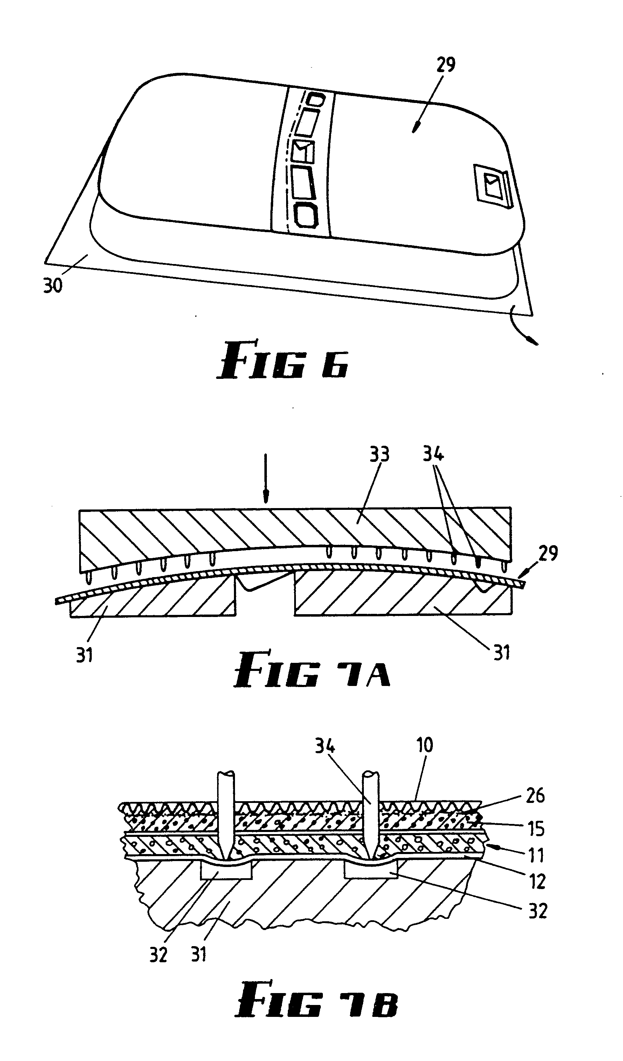

Referring first to Fig. 1, a roof headliner for a motor vehicle comprises a substrate 10 of high wet strength corrugated fibreboard (cardboard), and a tri-laminate 11 which comprises a face layer 12 of velour, an intermediate layer 13 of soft resilient open cell polyurethane foam, and an impervious film 14 of polyurethane. Tri-laminates of this type are in common use and readily available.

As described below, there is an intermediate layer 15 of polyurethane foam which, being of similar material to the film 14, is firmly adhered to the film 14 and also firmly adhered to the corrugated surface of the substrate 10.

The method of production comprises the following steps, in this embodiment being performed in the order set forth but the invention is not necessarily limited to that order:

Firstly, the periphery of a tri-laminate sheet 11 having the structure referred to above is secured to a thin flexible open bar like frame 18 which has strips of touch-and-hold material (such as sold under the Trade Mark Velcro) designated 19 secured to both upper and lower surfaces, and some although not necessarily all of the edges are folded over as shown in Fig. 2B. The tri-laminate 11 has a polyurethane film 14 downmost and the velour face layer 12 uppermost. With the trilaminate 11 affixed thereto, the frame 18 is secured to an upper die part 20 of a die set 21 (Fig. 5), the upper die part being a male portion. The securing is achieved by means of a plurality of pins designated 22 (shown also in Fig. 2A).

Secondly, the lower die part 23 of the die set 21 has whatever inserts 24 and 25 might be required (Figs. 3A and 3B) located therein at a loading station external from the press, whereafter two half sheets of fibreboard 10 are positioned to abut the edges of the inserts 24 and 25 (best seen in Fig. 4C) and at the same time, two half sheets of chopped strand fibreglass 26 overlay the fibreboard half sheets 10. These eventually have the function of greatly stiffening the entire laminate.

After these half sheets are positioned, quantities of foam forming chemicals designated 27 are placed over the fibreboard and fibreglass, and the lower die part is moved horizontally from its loading station to lie beneath the upper die part which is vertically moveable by action of the press 28. In the third step, the upper die part is then closed over the lower die part, the pins 22 are removed and the die parts are retained closed for some minutes until foaming has been completed and the inserts have been firmly located on what, at that stage, is the upper surface of the roof headliner.

There is a considerable advantage of adhering the semirigid polyurethane to the corrugated layer of the substrate. It adheres over a wider area than it would over a plain sheet so that adhesive strength is increased. The polyurethane freely flows through the chopped strand fibreglass half sheets 26 to achieve this adhesion, and once the fibreglass sheets are embedded in the polyurethane, considerable strength is imparted by the reinforcing fibreglass strands. However, some degree of flexure is retained.

The surface of the tri-laminate 11 which is subjected to the foam from the chemicals 27 is itself a polyurethane surface, and therefore a good adhesion occurs between the semirigid intermediate layer 15 and the tri-laminate 11.

After most of the foaming action has taken place, in the fourth step the moulded roof headliner assembly 29 is removed (as shown in Fig. 6) and the peripheral edge 30 is trimmed and discarded.

In this condition, the roof headliner assembly 29 will have good acoustic values but these are still further enhanced by the further piercing operation of Figs. 7A and 7B. The fifth step is for the roof headliner is placed fabric side down over a contoured support 31 which contains a plurality of apertures 32, in the form of shallow blind end recesses. A moveable platen 33 has a plurality of piercing tools 34 projecting down from it, and these pierce through the substrate 10, the chopped fibreglass mats 26, the semirigid intermediate layer 15, and the tri-laminate 11, but the tools 34 are so positioned so that they distort but do not pierce the velour face layers 12. This is best seen in Fig. 7B. When the piercing tools 34 are withdrawn, the face layer 12 gradually resumes its normal position, but is in direction communication with apertures which pass right through the entire laminate, and this is found to greatly enhance the sound absorption and transmission qualities of the product.

On tests which have now been undertaken on assemblies made in accordance with the invention, some very favourable results have been achieved:

(a) the finished appearance is found to be very uniform in shape, size and thickness;

(b) there is no objectional or offensive odour;

(c) cyclic temperatures at high temperatures, low temperatures and high humidity indicated that the cellular product was insignificant after such testing there was no evidence of delamination;

(d) the acoustic properties were excellent, with up to 90% sound absorbtion at 500 Hz. No defects were identified with aging. A change in length in any direction on heating to a temperature of 80°C for two hours was less than 0.5%. The product maintained its substantial rigidity but was nevertheless capable of withstanding normal handling procedures without cracking or breaking. The product also exhibited good cold impact, indentation recovery and flammability properties.

(e) The tri-laminate is capable of deformation in three planes, and this facility is enhanced when it is warmed by the exothermic reaction of the polyurethane foam components during the foaming process. The process thereby greatly increases the choice of shapes available to a designer, prior art headliners heretofore being generally limited to shapes varying in two planes only (except for very moderate variations).

(f) There is no separate adhesion operation required, the foaming polyurethane also performing the adhesion function.

(g) The existence of the impervious backing film on the tri-laminate inhibits flow of polyurethane into the soft foam layer of the laminate, which would otherwise result in a more rigid face.

The affixing of a roof headliner according to this invention to the metal parts of a vehicle body can take any one of a number of forms, and fixing requirements are less stringent than with prior art roof headliners because of the inherent stability and rigidity of the product of this invention. In some instances the fixing can merely be by means of hardware attached to the metal parts of a vehicle. However in the preferred embodiment the hardware can be directly attached to the inserts 24 and 25, and the affixing can be by any one of a number of known means to the roof rails of the vehicle. For example, use may be made of metal edging for the headliner carrying on it retention tabs or members which snap into position into retaining brackets or strips carried by the roof rails of the vehicle. However, the fixing does not represent portion of this invention, and therefore it is not herein described.

## Claims

1. A roof headliner comprising a substrate of corrugated fibreboard, a facing tri-laminate itself having a face layer of fabric, a layer of soft resilient foam, and an impervious backing film, and an intermediate layer of relatively stiff semirigid foam sandwiched between the substrate and the soft resilient foam, and adhering the substrate to the facing laminate.

2. A roof headliner according to claim 1 wherein the facing laminate comprises a face layer of velour, a layer of open cell soft resilient foam, and a polyurethane film, said intermediate layer of relatively stiff semirigid foam being foam polyurethane adhered to the fibreboard and to the polyurethane film.

3. A roof headliner according to either claim 1 or claim 2 further comprising a layer of fibreglass reinforcing fibres contiguous with the substrate and embodied within the relatively stiff semirigid foam.

4. A method of manufacture of a roof headliner comprising:

(a) securing the periphery of a tri-laminate sheet having a face layer of fabric, an intermediate layer of open cell soft resilient foam, and a backing layer of polyurethane film, to an open frame, and attaching the frame to a male die of a press,

(b) positioning a corrugated fibreboard sheet in a female die of the press which is of shape complementary to the shape of said male die,

(c) applying foam forming chemicals to one of said sheets, locating one of said dies above the other, and closing said dies together,

(d) retaining the dies closed during foaming of said chemicals, and

(e) opening the dies and removing the thereby moulded headliner.

5. A method according to claim 4 wherein the male die is the upper die of a die set and attached to the press, and the female die is a lower die of the die set movable from a loading station into the press, to lie beneath the upper die, further comprising positioning a layer of glass reinforcing fibres over the corrugated fibreboard sheet and applying the foam forming chemicals to the fibreboard sheet through those glass reinforcing fibres while the lower die is at its loading station, moving the lower die into the press, and closing the dies by action of the press.

6. A method according to claim 5 wherein the roof headliner embodies inserts, the method further comprising laying the inserts in the lower die and abutting the sheets of fibreboard and glass reinforcing fibres against the inserts, before applying the foam forming chemicals, said application of foam forming chemicals being in sufficient quantity to bond together the fibreboard, inserts, glass fibres and tri-laminate sheet.

7. A method according to claim 5 further comprising trimming the peripheral edge of the head liner after its removal from the dies.

8. A method according to claim 5 or claim 6 further comprising positioning the headliner fabric side down over a contoured support after its removal from the dies, and piercing the fibreboard substrate, the layer of glass, the foamed chemicals, the polyurethane film backing and the intermediate layer of open cell soft resilient foam of the tri-laminate sheet, but not the fabric, to form a plurality of apertures extending from the fabric through the remainder of the headliner and opening behind the substrate.

**FIG 1**

EP 0 364 102 A2

**FIG 2 A**

**FIG 2 B**

**FIG 3A**

**FIG 3B**

FIG 4A

FIG 4B

FIG 4C

FIG 5

**FIG 6**

**FIG 7A**

**FIG 7B**